# EUROPEAN PATENT APPLICATION

(11) **EP 4 727 168 A1**
(43) Date of publication of application: **15.04.2026**
(21) Application number: 25206901.8
(22) Date of filing: 06.10.2025
(51) Int. Cl.: H04R 3/12, H04S 3/00

(54) **DUAL-PURPOSE SOUND SYSTEM FOR AUDIO RENDERING AND ULTRASONIC BEACON SIGNALING**

(30) Priority: 10.10.2024 US 202418911289
(71) Applicant: Nokia Solutions and Networks Oy, 02610 Espoo (FI)
(72) Inventor: ETTER, Walter, Ocean, NJ (US); HUANG, Gang, Monroe Township, NJ (US)
(74) Representative: Nokia EPO representatives

(57) **Abstract**

Apparatus and method of implementing a dual-purpose sound system. In an embodiment, the apparatus comprises a first stage comprising a master volume controller configured to perform volume control of audio signals for audio channels of a sound system to generate variable-volume audio signals for the audio channels, and a second stage comprising an audio mixer configured to mix the variable-volume audio signals for a target set of the audio channels with fixed-volume ultrasonic signals for localization to generate at least two combined audio/ultrasonic signals configured for output to loudspeakers of the sound system corresponding with the target set of the audio channels.

## Description

### Technical Field

This disclosure is related to the field of indoor/local positioning, and more particularly, to ultrasonic or acoustic localization.

### Background

Indoor or local positioning systems, for tasks such as robotic localization, navigation of objects, inventory tracking, etc., are expected to play an ever-increasing role in residential and commercial buildings. These tasks may be performed with an ultrasonic localization system, which is akin to an indoor Global Positioning System (GPS), that facilitates localization and tracking with superior accuracy. One issue with ultrasonic localization systems is the cost of the infrastructure.

### Summary

Described herein are a dual-purpose sound system and associated methods of implementing a dual-purpose sound system. A dual-purpose sound system combines an audio or sound system with an ultrasonic beacon system. A sound system includes a plurality of speakers configured to emit audible sounds for music, voice (e.g., pages or announcements), etc. For example, residential homes may have smart speakers, stereo systems, or surround sound systems (e.g., 5.1 surround sound, 5.1.2 surround sound, 5.1.4 surround sound, Dolby Atmos, etc.). Commercial buildings, such as retail stores, malls, hotels, distribution centers, warehouses, manufacturing facilities, etc., may have speakers installed, such as in the ceiling, to play music, voice announcements, etc. A dual-purpose sound system as described herein uses the speakers as an ultrasonic beacon system for localization or object tracking. Thus, the dual-purpose sound system acts as a two-in-one system, that is, an audio system for music/voice and an ultrasonic beacon system emitting beacon signaling for localization or object tracking. One technical benefit is the cost, set up, and maintenance associated with a separate beacon system is avoided.

In an embodiment (also referred to as an aspect), an apparatus comprises a first stage comprising a master volume controller configured to perform volume control of audio signals for audio channels of a sound system to generate variable-volume audio signals for the audio channels, and a second stage comprising an audio mixer configured to mix the variable-volume audio signals for a target set of the audio channels with fixed-volume ultrasonic signals for localization to generate at least two combined audio/ultrasonic signals configured for output to loudspeakers of the sound system corresponding with the target set of the audio channels.

In an embodiment, the audio mixer of the second stage comprises a second audio mixer, and the first stage further comprises a first audio mixer configured to mix the audio signals to generate mixed audio signals provided to the master volume controller.

Other embodiments may include computer readable media, other systems or apparatus, or other methods or means as described below. Also, one or more embodiments as described above may be combinable as described herein.

The above summary provides a basic understanding of some aspects of the specification. This summary is not an extensive overview of the specification. It is intended to neither identify key or critical elements of the specification nor delineate any scope of the particular embodiments of the specification, or any scope of the claims. Its sole purpose is to present some concepts of the specification in a simplified form as a prelude to the more detailed description that is presented later.

### Description of the Drawings

Some embodiments of the invention are now described, by way of example only, and with reference to the accompanying drawings. The same reference number represents the same element or the same type of element on all drawings.
FIG. 1 illustrates an ultrasonic localization system in an illustrative embodiment.
FIG. 2 illustrates a dual-purpose sound system in an illustrative embodiment.
FIGS. 3A-3D illustrate structures of speaker systems in some examples.
FIG. 4 illustrates 5.1 surround sound as an example.
FIG. 5A is a block diagram illustrating a dual audio system in an illustrative embodiment.
FIG. 5B is a block diagram of a first stage of the dual audio system in an illustrative embodiment.
FIG. 6 is a flow chart illustrating a method of operating a dual audio system in an illustrative embodiment.
FIG. 7 illustrates a dual audio system in operation in an illustrative embodiment.
FIG. 8 is a block diagram illustrating a dual audio system in an illustrative embodiment.
FIG. 9 is a flow chart illustrating a method of operating a dual audio system in an illustrative embodiment.
FIG. 10 is a block diagram illustrating a dual audio system in an illustrative embodiment.
FIG. 11 is a block diagram illustrating a dual audio system in an illustrative embodiment.
FIG. 12 is a block diagram illustrating a dual audio system in an illustrative embodiment.
FIG. 13 is a block diagram illustrating a dual audio system in an illustrative embodiment.
FIG. 14 illustrates an upward-firing speaker in an illustrative embodiment.
FIG. 15 illustrates an upward-firing speaker and a forward-firing speaker in an illustrative embodiment.
FIG. 16 illustrates a dual audio system for a distributed sound system in an illustrative embodiment.
FIG. 17 illustrates a user application for controlling a dual-purpose sound system in an illustrative embodiment.
FIGS. 18A-18B illustrate how audio signals and ultrasonic signals are frequency multiplexed in illustrative embodiments.
FIG. 19 is a flowchart illustrating a method of mixing an audio signal and an ultrasonic signal in an illustrative embodiment.

### Description of Embodiments

The figures and the following description illustrate specific exemplary embodiments. It will thus be appreciated that those skilled in the art will be able to devise various arrangements that, although not explicitly described or shown herein, embody the principles of the embodiments and are included within the scope of the embodiments. Furthermore, any examples described herein are intended to aid in understanding the principles of the embodiments, and are to be construed as being without limitation to such specifically recited examples and conditions. As a result, the inventive concept(s) is not limited to the specific embodiments or examples described below, but by the claims and their equivalents.

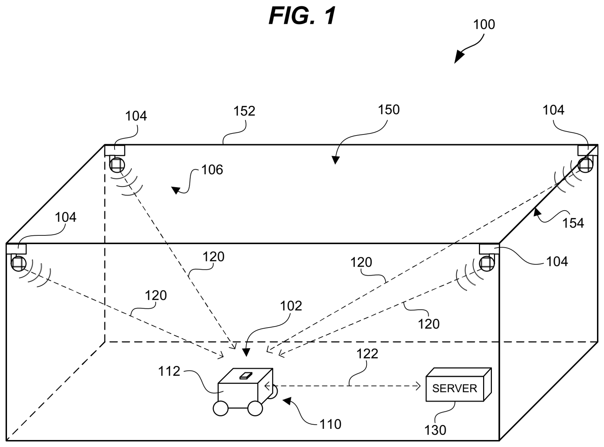

FIG. 1 illustrates an ultrasonic localization system 100 in an illustrative embodiment. Ultrasonic localization system 100 is configured to track or determine the location of an acoustic receiver 102 that is mobile. Ultrasonic localization system 100 uses a beacon system 106 comprising a plurality of stationary transmitters 104 each configured to transmit or emit ultrasonic signals or pulses, referred to as beacons. To track location, the acoustic receiver 102 includes a microphone or the like that receives the ultrasonic signals. For example, the acoustic receiver 102 may include an acoustic tag (e.g., a flat tag) comprising a circuit with an attached microphone or microphone array configured to receive ultrasonic signals. The acoustic receiver 102 or a localization server 130 communicatively coupled to the acoustic receiver 102 is configured to calculate measurements of the ultrasonic signals (e.g., time-of-arrival (ToA), angle-of-arrival (AoA), etc.) to estimate the distance between the acoustic receiver 102 and one or more of the transmitters 104. In the example in FIG. 1, ultrasonic localization system 100 is configured or implemented within an enclosed or indoor space 150, such as inside a (residential or commercial) building 152 or some other enclosed structure (e.g., manufacturing facility, warehouse, distribution center, etc.). However, ultrasonic localization system 100 may also be configured or implemented in an outdoor space. The transmitters 104 (also referred to as transmitter nodes) are installed at fixed, known locations within the indoor space 150. For example, a transmitter 104 may be installed at or toward a ceiling 154 of the indoor space 150, or proximate to another boundary within the indoor space 150. Any other beacon locations may work as well, as long as the geometric accuracy of AoA or ToA is sufficient at the mobile positions. Each transmitter 104 emits ultrasonic signals/pulses/beacons in the ultrasonic frequency spectrum. The acoustic receiver 102 (also referred to as a receiver/acoustic node, acoustic tracker tag, ultrasonic tag, etc.) is associated with a target or tracked object 110 that is mobile or at non-fixed positions within the indoor space 150. Acoustic receiver 102 may be carried by or disposed within the tracked object 110 to be located, or may otherwise have a predefined positional relationship to the tracked object 110. As such, by determining the location of the acoustic receiver 102, the location of the tracked object 110 may be correspondingly determined, such as by either being co-located or being in a predefined positional relationship relative to the acoustic receiver 102. For example, an acoustic receiver 102 may be installed on a mobile device or mobile robot 112 as illustrated in FIG. 1. However, an acoustic receiver 102 may be worn or held by a human user (e.g., smartphone, smartwatch, wearable tracker, etc.), attached to inventory items, or otherwise attached to a tracked object 110.

In operation, the transmitters 104 emit ultrasonic sound waves 120 (also referred to as ultrasonic beacon signals or ultrasonic beacons) within the indoor space 150, and acoustic receiver 102 performs measurements based on the received ultrasonic sound waves 120. The acoustic receiver 102 may report the measurements 122 to a centralized system/server (e.g., through a wireless interface), such as localization server 130. Localization server 130 may calculate or determine position information for the acoustic receiver 102 based on the measurements, such as by performing multilateration using estimated distances to the transmitters 104. Localization server 130 may therefore track the location or position (e.g., in a coordinate system of the indoor space 150) of the acoustic receiver 102. It is noted that in some embodiments, the acoustic receiver 102 may process the measurements 122 to calculate or determine the position information, and report the position information to localization server 130. The localization server 130 may also provide path planning or driving directions to mobile robot 112 (e.g., based on the position of mobile robot 112). In other cases, no server is needed (e.g., when only the mobile robot 112 uses the position information).

An ultrasonic localization system 100 as illustrated in FIG. 1 facilitates localization and tracking with high accuracy. One potential concern with ultrasonic localization systems in general is the cost of the infrastructure, installation, etc. For example, dedicated transmitters 104 may need to be purchased, installed, calibrated, etc., to implement some ultrasonic localization systems.

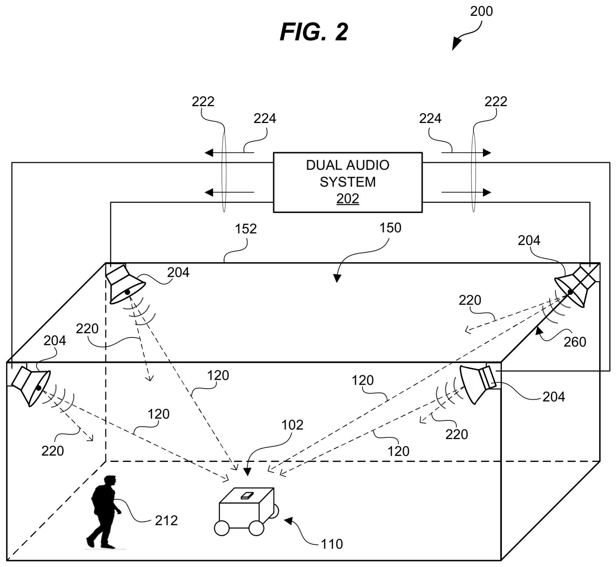

In embodiments described herein, an ultrasonic beacon system for localization is implemented using a sound system comprising a plurality of speakers. FIG. 2 illustrates a dual-purpose sound system 200 in an illustrative embodiment. Dual-purpose sound system 200 is a system that combines the features of an audio/sound system with the features of an ultrasonic beacon system. Dual-purpose sound system 200 may be configured or implemented within an indoor space 150, such as inside a (residential or commercial) building 152 or some other enclosed or partially-enclosed structure. Dual-purpose sound system 200 includes a plurality of speakers 204 installed at fixed, known locations, such as within the indoor space 150. A speaker 204 is a device configured to convert electrical signals into sound waves (i.e., acoustic energy), and are also referred to herein as loudspeakers. Although the dual-purpose sound system 200 of FIG. 2 includes four speakers 204, the dual-purpose sound system 200 may include more or less speakers 204, such as *N* speakers. The number of speakers 204 may depend upon the environment in which the dual-purpose sound system 200 is implemented. With respect to an indoor space 150, the number of speakers 204 may be dependent on the size of the indoor space 150, with larger indoor spaces sometimes utilizing a larger number of speakers 204 than smaller indoor spaces.

The speakers 204 may be positioned at any of a variety of locations within the indoor space 150. For example, residential homes may have smart speakers, stereo systems, or surround sound systems (e.g., 5.1 surround sound, 5.1.2 surround sound, 5.1.4 surround sound, Dolby Atmos, etc.). Generally, these speakers 204 may be placed on shelfs, on stands, on the floor, attached to walls, mounted in or on the ceiling, etc. Commercial buildings, such as retail stores, malls, hotels, distribution centers, warehouses, manufacturing facilities, etc., may have speakers installed, such as in the ceiling. In an embodiment, the speakers 204 may be placed proximate to, such as adjacent to, a boundary 260 (e.g., walls, ceiling, floor, etc.) of the indoor space 150. The locations of the speakers 204 are known in advance, that is, the locations of the speakers 204 are predefined, such that the locations of the speakers 204 may be utilized in order to determine the location of an acoustic wireless receiver 102 and, in turn, a tracked object 110 to be located.

In an embodiment, at least a subset (e.g., two or more) of the speakers 204 are configured to emit audible sound waves 220 and ultrasonic sound waves 120. Audible sound waves 220 are sound waves having a frequency in the audible spectrum (e.g., about 20 Hz to 20 kHz), which are detectable by a human 212. For example, speakers 204 may emit audible sound waves 220 for (background) music, paging messages/announcements or the like, etc. Speakers 204 may emit ultrasonic sound waves 120 so that the speakers 204 act as transmitters for localization. Thus, dual-purpose sound system 200 acts as an audio/sound system and an ultrasonic beacon system to track or determine the location of an acoustic receiver 102. As above, acoustic receiver 102 is associated with a target or tracked object 110 that is mobile or at non-fixed positions, such as within an indoor space 150. Acoustic receiver 102 may be carried by or disposed within the tracked object 110 to be located, or may otherwise have a predefined positional relationship to the tracked object 110. As such, by determining the location of the acoustic receiver 102, the location of the tracked object 110 may be correspondingly determined, such as by either being co-located or being in a predefined positional relationship relative to the acoustic receiver 102.

A dual audio system 202 is communicatively connected to the speakers 204, such as through wired or wireless connections. Dual audio system 202 is configured to provide drive or output signals 222 to the speakers 204. As will be described in further detail below, one or more of the output signals 222 generated by the dual audio system 202 comprise combined audio/ultrasonic signals 224. A combined audio/ultrasonic signal 224 comprises an ultrasonic signal mixed with an audio signal. An audio signal is an electrical representation of audible sound waves that may be captured, transmitted, stored, and/or processed by electronic devices. An ultrasonic signal is an electrical representation of ultrasonic sound waves that may be captured, transmitted, stored, and/or processed by electronic devices.

In operation, dual audio system 202 provides combined audio/ultrasonic signals 224 to two or more of the speakers 204. A speaker 204 receiving a combined audio/ultrasonic signal 224 from the dual audio system 202 emits ultrasonic sound waves 120 in response to ultrasonic signals of the combined audio/ultrasonic signal 224, and emits audible sound waves 220 in response to audio signals of the combined audio/ultrasonic signal 224. The ultrasonic sound waves 120 are used for localization of tracked objects 110. As above, acoustic receiver 102 performs measurements based on the received ultrasonic sound waves 120 to determine or calculate position information for the acoustic receiver 102. Concurrently, the audible sound waves 220 are used to play music, voice announcements (e.g., pages), etc., which may be heard by a human 212 located within the indoor space 150. One technical benefit is dual-purpose sound system 200 acts as a two-in-one system, that is, an audio system for music/voice and an ultrasonic beacon system for object tracking. Dual-purpose sound system 200 may replace or augment state-of-the art audio or sound systems, such as distributed sound systems for background music, paging systems, surround sound systems, single-unit Bluetooth speakers or smart speakers, etc., by simultaneously adding ultrasonic signals to audio signals that are output to speakers 204. With this combined system, any tracked object 110 can be tracked while music or other audible sounds are being played. Acoustic receiver 102 may also be connected to a server as in ultrasonic localization system 100 in order to offload the computation of the position, to receive path planning information or driving directions, or to receive any other control information.

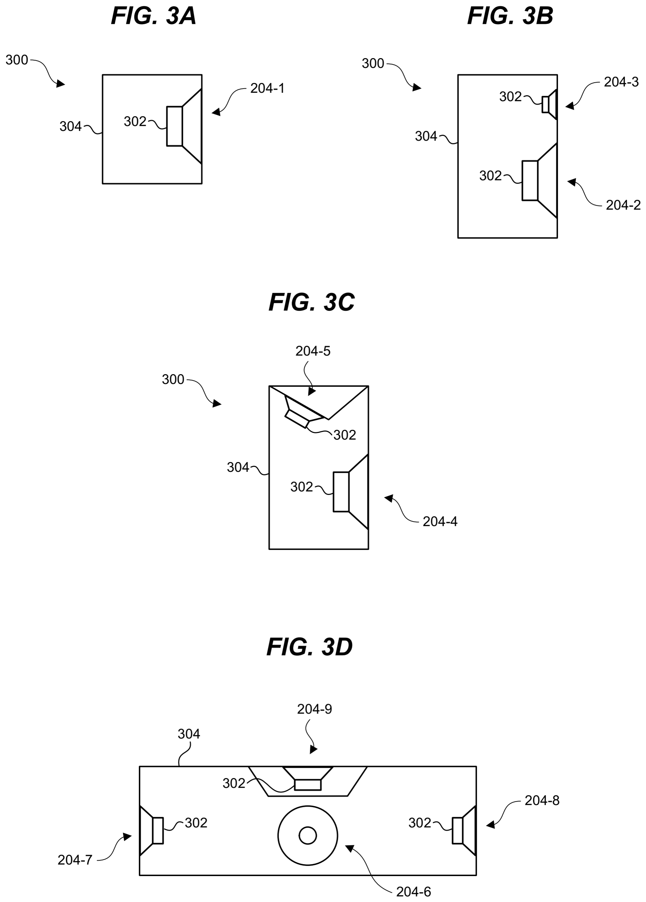

FIGS. 3A-3D illustrate structures of speaker systems in some examples. In FIG. 3A, the speaker system 300 includes a forward-firing speaker 204-1 comprising a speaker driver 302 disposed within an enclosure 304. A speaker driver 302 is an electroacoustic transducer that converts audio signals into corresponding sound. In FIG. 3B, the speaker system 300 includes a pair of speakers 204, such as a forward-firing speaker 204-2 and a tweeter 204-3 disposed within an enclosure 304. In FIG. 3C, the speaker system 300 includes a pair of speakers 204, such as a forward-firing speaker 204-4 and an upward-firing speaker 204-5 disposed within an enclosure 304. In FIG. 3D, the speaker system 300 includes four speakers 204, such as a forward-firing speaker 204-6, a left speaker 204-7, a right speaker 204-8, and a surround speaker 204-9 disposed within an enclosure 304. The speaker systems 300 in FIGS. 3A-3D are provided as examples and other speaker systems are considered herein.

In general, a sound system (e.g., dual-purpose sound system 200) is configured with a number (N) of audio channels. For example, mono sound has one audio channel, while stereo sound has two audio channels (a left channel and a right channel). 5.1 surround sound has six channels comprising a center channel (CNT), a front left (FL) channel, a front right (FR) channel, two surround channels (surround left (SL) and surround right (SR)), and a low-frequency effects (LFE) channel designed for a subwoofer. 5.1.2 surround sound has eight channels comprising similar channels as 5.1 surround sound with the addition of a height front left (HFL) channel and a height front right (HFR) channel.

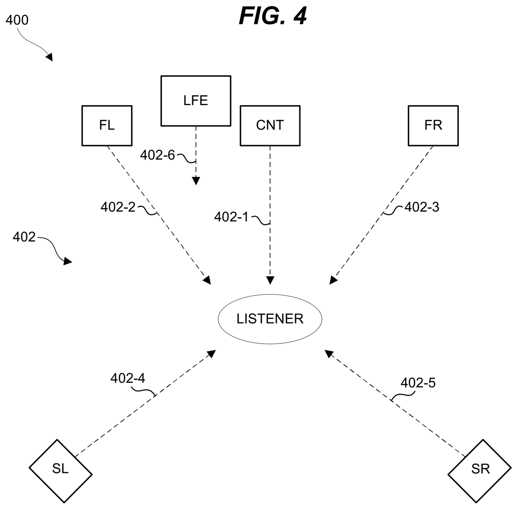

FIG. 4 illustrates 5.1 surround sound 400 as an example. A sound system, such as a 5.1 surround sound system, is configured with audio channels 402. An audio channel 402 is a representation of sound. In 5.1 surround sound 400, the audio channels 402 include a center channel 402-1 (CNT), front left (FL) channel 402-2, front right (FR) channel 402-3, surround left (SL) channel 402-4, surround right (SR) channel 402-5, and LFE channel 402-6.

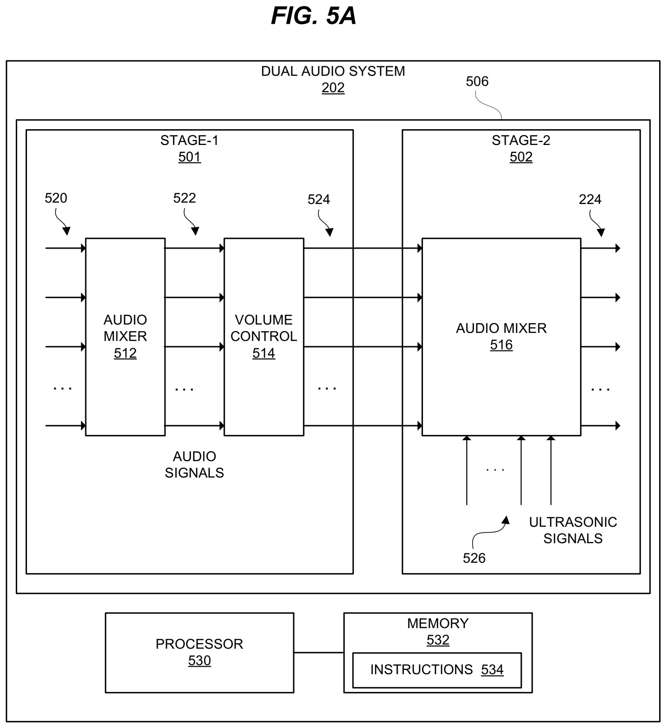

In embodiments described herein, dual audio system 202 is configured to superimpose ultrasonic signals/channels on a plurality of the audio channels 402 of a sound system. FIG. 5A is a block diagram illustrating a dual audio system 202 in an illustrative embodiment. Dual audio system 202 is an apparatus, data processing element, circuitry, etc., configured to generate combined audio/ultrasonic signals 224 that are supplied to speakers 204. Dual audio system 202 includes a two-stage mixer 506 configured to combine variable-volume audio signals with constant- or fixed-volume ultrasonic (beacon) signals. In the first stage 501 (i.e., stage-1), the two-stage mixer 506 is configured to render and/or mix the audio signals, and in the second stage 502 (i.e., stage-2), the two-stage mixer 506 is configured to mix the ultrasonic signals with the audio signals. In two-stage mixer 506, master volume control is placed in between the audio signal mixer and the ultrasonic signal mixer. One technical benefit is variable-volume audio signals can be mixed with constant-level ultrasonic signals. In other words, the ultrasonic signal levels are not affected by volume changes of the audio signals. In this way, a constant and sufficiently high beacon signal level ensures reliable tracking, even if a tracked object 110 is at a larger distance (e.g., 30 meters) from the speakers 204.

The first stage 501 of two-stage mixer 506 comprises an audio mixer 512 (also referred to as a first audio mixer, a stage-1 audio mixer, etc.), which is a system, apparatus, circuitry, means, etc., configured to mix audio signals 520 to generate mixed audio signals 522 for audio channels 402 of a sound system. The first stage 501 further comprises a volume controller 514 (also referred to as a master volume controller), which is a system, apparatus, circuitry, means, etc., configured to adjust or set the volume of audio signals (e.g., the mixed audio signals 522) to generate variable-volume audio signals 524 for the audio channels 402. Volume controller 514 may control/adjust the volume of the *N* audio channels 402 individually as desired. The second stage 502 comprises an audio mixer 516 (also referred to as a second audio mixer, a stage-2 audio mixer, etc.), which is a system, apparatus, circuitry, means, etc., configured to mix variable-volume audio signals 524 for a target set of the audio channels 402 with fixed-volume ultrasonic signals 526 (also referred to as ultrasonic beacon signals) to generate combined audio/ultrasonic signals 224.

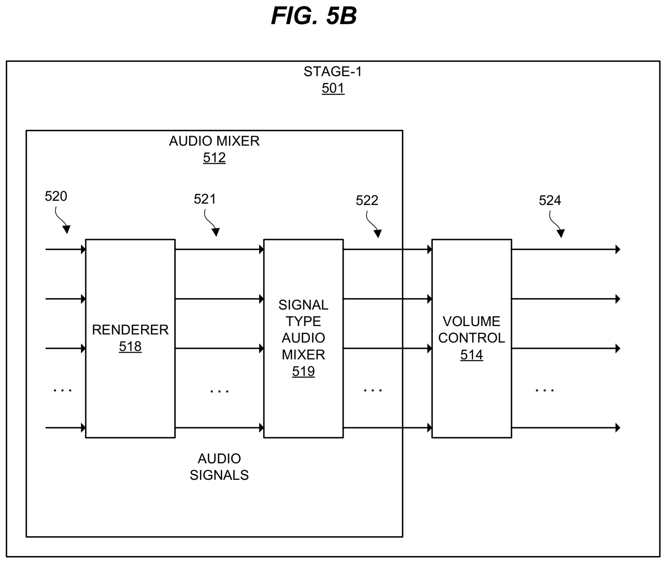

FIG. 5B is a block diagram of the first stage 501 of dual audio system 202 in an illustrative embodiment. In an embodiment, audio mixer 512 may comprise a renderer 518 and a signal type audio mixer 519. Renderer 518 is configured to render the source audio signals 520 to generate rendered audio signals 521. An encoded audio stream (i.e., the audio bit stream) received by dual audio system 202 may contain various signal types, such as channel signals, object signals, or Higher Order Ambisonics (HOA) coefficient signals. The encoded audio stream may also contain any combination of signal types. Accordingly, renderer 518 may perform (e.g., a combination of channel signal rendering (e.g., upmixing or downmixing), object signal rendering, or HOA coefficient signal rendering. When an encoded audio stream contains multiple signal types, signal type audio mixer 519 mixes the rendered audio signals 521 to generate the mixed audio signals 522. The encoded audio stream may contain channel signals, object signals, HOA coefficient signals, or any other encoded audio signals. Various audio coding standards support channel signals, object signals, and HOA coefficient signals, for example, MPEG-H 3D Audio, specified as ISO/IEC 23008-3 (MPEG-H Part 3), developed by the ISO/IEC Moving Picture Experts Group (MPEG), and MPEG-I Immersive Audio, specified as ISO/IEC 23090-4.

In FIG. 5A, one or more of the subsystems of dual audio system 202 may be implemented on a hardware platform comprised of analog and/or digital circuitry. One or more of the subsystems of dual audio system 202 may be implemented on a processor 530 that executes instructions 534 stored in memory 532. A processor 530 comprises an integrated hardware circuit configured to execute instructions 534 to provide the functions of dual audio system 202. Processor 530 may comprise a set of one or more processors or may comprise a multi-processor core, depending on the particular implementation. Memory 532 is a non-transitory computer readable medium for data, instructions, applications, etc., and is accessible by processor 530. Memory 532 is a hardware storage device capable of storing information on a temporary basis and/or a permanent basis. Memory 532 may comprise a random-access memory, or any other volatile or non-volatile storage device.

Dual audio system 202 may include various other components not specifically illustrated in FIG. 5A, such as additional audio mixers, amplifiers, digital-to-analog (D/A) converters, analog-to-digital (A/D) converters, etc.

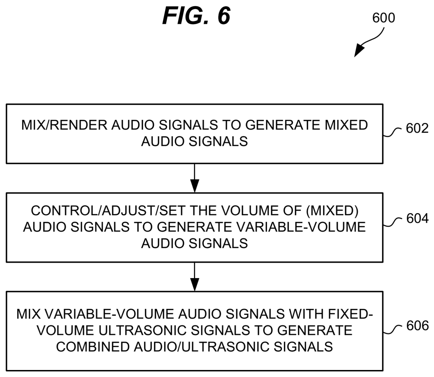

FIG. 6 is a flow chart illustrating a method 600 of operating a dual audio system 202 in an illustrative embodiment. The steps of method 600 will be described with reference to dual audio system 202 in FIG. 5A, but those skilled in the art will appreciate that method 600 may be performed in other systems or devices. Also, the steps of the flow charts described herein are not all inclusive and may include other steps not shown, and the steps may be performed in an alternative order.

In the first stage 501, audio mixer 512 may render and/or mix audio signals 520 to generate mixed audio signals 522 for audio channels 402 of a sound system 200 (step 602). However, it is noted that the rendering/mixing at the first stage 501 may not be needed depending on the content of an incoming audio stream. Volume controller 514 performs volume control of audio signals (e.g., the mixed audio signals 522) to generate variable-volume audio signals 524 for the audio channels 402 (step 604). Thus, the volume level of the audio signals for each audio channel 402 is set in the first stage 501, before mixing with any ultrasonic signals 526. In the second stage 502, audio mixer 516 mixes, superimposes, or frequency-multiplexes variable-volume audio signals 524 for a target set of audio channels 402 (i.e., two or more) with the fixed-volume ultrasonic signals 526 to generate the combined audio/ultrasonic signals 224 (step 606). The combined audio/ultrasonic signals 224 (i.e., two or more) are configured for output to speakers 204 of the sound system 200 corresponding with the target set of audio channels 402. Thus, dual audio system 202 provides the combined audio/ultrasonic signals 224 to the speakers 204 corresponding with the target set of audio channels 402. Dual audio system 202 may also provide output signals 222 (audio only) to one or more speakers 204 that are not within the target set of audio channels 402. One technical benefit is variable-volume audio signals 524 are mixed with fixed-volume ultrasonic signals 526 to provide a dual-purpose sound system.

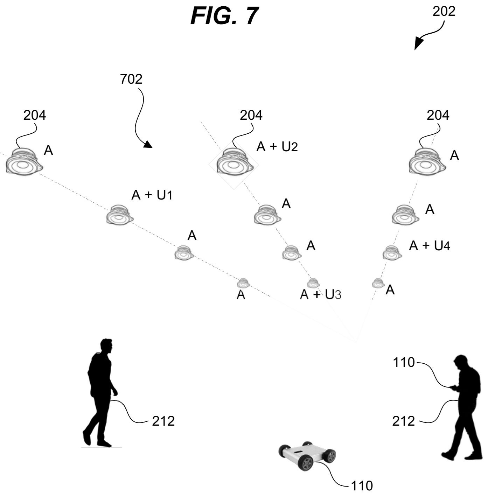

FIG. 7 illustrates a dual audio system 202 in operation in an illustrative embodiment. In this example, dual audio system 202 includes a group of speakers 204 installed in the ceiling of a structure. A target set 702 of audio channels 402 are designated for localization in dual audio system 202. Thus, the speakers 204 receiving the combined audio/ultrasonic signals 224 will emit audible sound waves 220 (indicated with an "A") detectable by humans 212, such as music, voice, etc., and will also emit ultrasonic sound waves 120 (indicated with a "U") that may be used for localization of one or more tracked objects 110. One technical benefit is the dual audio system 202 allows a sound system to operate as a dual-purpose sound system 200. Thus, dedicated transmitters 104 do not need to be installed, which may reduce the material and/or installation cost of implementing localization, such as within an indoor space.

Traditionally, two separate systems were used for object tracking and audio playback with one system to render music/voice signals and another system to render beacon signals. One reason for the two separate system is volume control is essential in a sound system for music/voice playback, but is detrimental in a beacon system as a beacon system needs to provide a constant beacon signal level anytime that an object is tracked or localized. Sound systems with a master volume control affects all input signals, whether they are audio signals or beacon signals. In other words, when the audio volume is changed, the beacon signal levels will change as well. Yet, to ensure reliable tracking, it is important that the beacon signals remain at a constant and a relatively high level any time an object is tracked or localized. Further, it is a challenge to render audible signals and inaudible ultrasonic beacon signals over a single system due to frequency band limitations in electronics and speakers.

Dual audio system 202 as described herein effectively merges a sound system with an ultrasonic beacon system. To do so, volume control is performed on the audio signals 522 before mixing with ultrasonic signals 526. Thus, any adjustment to the volume of the audio signals 522 does not affect the volume level of the ultrasonic signals 526. This makes it possible for variable-volume audio signals to be mixed with constant-level beacon signals. In other words, the beacon signal levels are not affected by any volume changes of the audio signals. In this way, a constant and sufficiently high beacon signal level ensures reliable tracking, even if a tracked object 110 is at a larger distance (e.g., 30 meters or more) from the speakers 204.

The following provides certain embodiments describing configurations for a dual audio system 202. The processes, systems, and methods described in the following embodiments may be incorporated in embodiments described above as desired. In the embodiments, *K* is the number of audio channels of an encoded audio stream, *N* is the number of audio channels of a sound system, and *M* is the number of desired ultrasonic signals/channels. A dual-purpose sound system 200 with *N* audio channels can support up to *N* ultrasonic signals, that is, the number of ultrasonic signals is limited by *M* ≤ *N.*

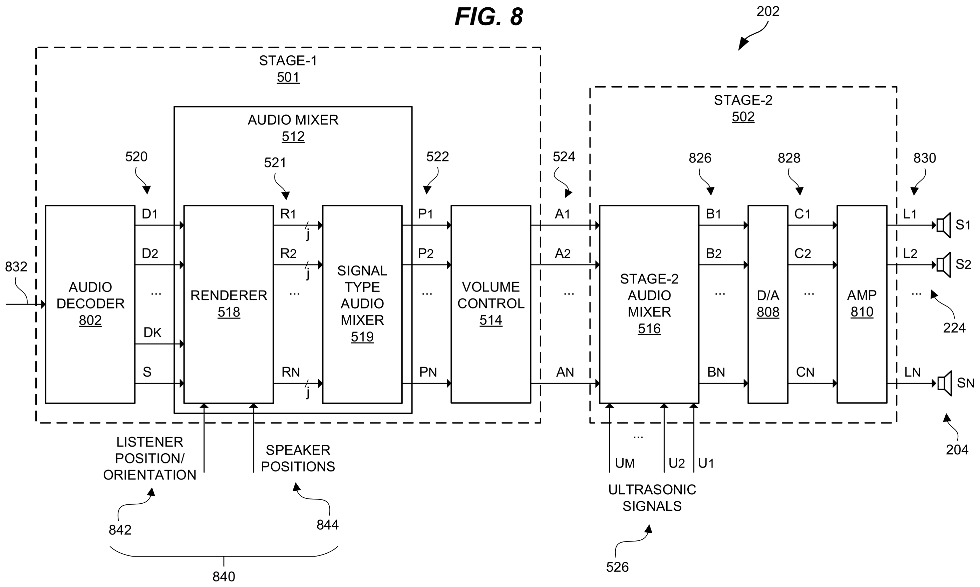

In an embodiment, the two-stage mixer concept is utilized in a dual audio system 202 with a stage-1 audio mixer 512 that map *K* source audio signals into *N* system audio signals 524, and a stage-2 audio mixer 516 that maps *M* ultrasonic signals 526 onto the *N* audio signals 524, with the volume control placed in between the stage-1 audio mixer 512 and the stage-2 audio mixer 516. FIG. 8 is a block diagram illustrating a dual audio system 202 in an illustrative embodiment. In this embodiment, dual audio system 202 includes a first stage 501 (i.e., stage-1) and a second stage 502 (i.e., stage-2) for generating the combined audio/ultrasonic signals 224. The first stage 501 includes a volume controller 514, with an audio decoder 802 and a stage-1 audio mixer 512 disposed upstream of the volume controller 514. Audio decoder 802 is configured to decode an encoded audio stream 832 into a plurality of audio signals, referred to as source audio signals 520 (e.g., D₁, D₂, ..., D_{K}). Renderer 518 is configured to render the source audio signals 520 to generate rendered audio signals 521 (e.g., R₁, R₂, ..., R_{N}). For example, renderer 518 may use metadata 840 to render the source audio signals 520, where the metadata 840 may comprise information 842 on a position and/or orientation of a listener, position information 844 for the speakers 204, etc. Signal type audio mixer 519 is configured to mix the rendered audio signals 521 to generate mixed audio signals 522 (e.g., P₁, P₂, ..., P_{N}). For example, signal type audio mixer 519 is configured to mix channel-based signals, object-based signals, HOA-based signals, etc. Volume controller 514 is configured to adjust or set the volume of the mixed audio signals 522 to generate variable-volume audio signals 524 (e.g., A₁, A₂, ..., A_{N}).

The second stage 502 includes a stage-2 audio mixer 516, with a D/A converter 808 and an amplifier 810 disposed downstream of the stage-2 audio mixer 516. The stage-2 audio mixer 516 is configured to mix a plurality of the variable-volume audio signals 524 with fixed-volume ultrasonic signals 526 (e.g., U₁, U₂, ..., U_{M}) to generate digital output signals 826 (e.g., B₁, B₂, ..., B_{N}). D/A converter 808 is configured to convert the digital output signals 826 to analog output signals 828 (e.g., C₁, C₂, ..., C_{N}). Amplifier 810 is configured to amplify the analog output signals 828 to generate amplified output signals 830 (e.g., L₁, L₂, ..., L_{N}). The set of amplified output signals 830, which are mixed with fixed-volume ultrasonic signals 526, are an example of the combined audio/ultrasonic signals 224 described above. Dual audio system 202 is configured to provide or supply the amplified output signals 830 (including the combined audio/ultrasonic signals 224) to a set of the speakers 204 (e.g., S₁, S₂, ..., S_{N}). The speaker(s) 204 receiving a combined audio/ultrasonic signal 224 will therefore emit two signals simultaneously, an audio signal for a listener (i.e., human 212), and an ultrasonic beacon signal for a tracked object 110. The listener can hear the audio signal but not the ultrasonic beacon signal, whereas an acoustic receiver 102 can "hear" the ultrasonic beacon signal and use it for tracking or localization and may also "hear" the audio signal and use it for equalization (of the speakers 204 or the voice), and/or for voice communication (for example, with a chatbot or a remote conference party), or for other interactions with a user. In an embodiment, each speaker 204 emits a different set of signals to enable the listener to hear spatial audio and to enable the acoustic receiver 102 to calculate its position and to equalize.

It is noted that while FIG. 8 shows a digital audio input (an audio bit stream), analog input signals could be processed with an added Analog-to-Digital (A/D) converter. Furthermore, when analog audio input is processed, the basic concept of a dual audio system 202 could be implemented with analog hardware, eliminating the need for A/D and D/A conversion.

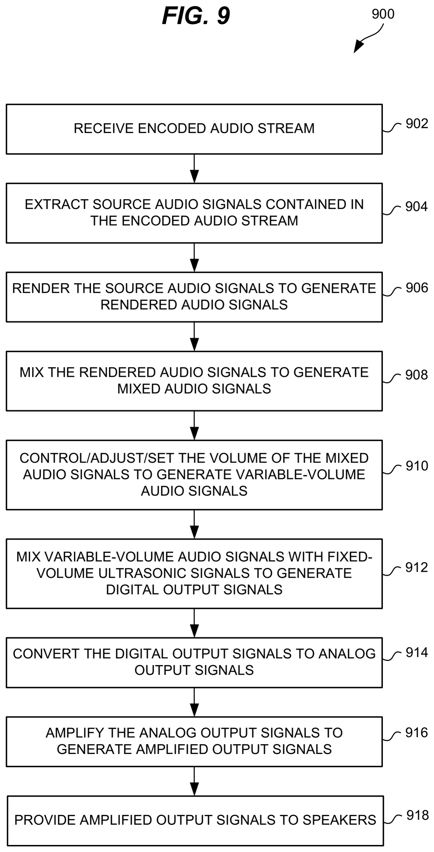

FIG. 9 is a flow chart illustrating a method 900 of operating a dual audio system 202 in an illustrative embodiment. The steps of method 900 will be described with reference to dual audio system 202 in FIG. 8, but those skilled in the art will appreciate that method 900 may be performed in other systems or devices.

In stage-1 of method 900, audio decoder 802 receives an encoded audio stream 832 (step 902), and extracts the *K* source audio signals 520 contained in the encoded audio stream 832 (step 904). The *K* source audio signals 520 are then processed to accommodate the number (*N*) of audio channels 402 of the dual-purpose sound system 200. This task is performed by the stage-1 audio mixer 512. Renderer 518 renders the source audio signals 520 to generate rendered audio signals 521 (step 906). The encoded audio stream 832 (i.e., the audio bit stream) may use channel encoding, object encoding, HOA encoding, or another encoding scheme or channel signal type. Accordingly, renderer 518 may perform channel signal rendering (e.g., upmixing or downmixing of the *K* source audio signals 520), object signal rendering, or HOA coefficient signal rendering with additional side information or metadata 840 (e.g., position information) provided in signal *S*. For channel-based audio, when *N<K,* the *K* source audio signals 520 are downmixed to the *N* audio channels 402 of the dual-purpose sound system 200. When *N>K,* the *K* source audio signals 520 are up-mixed to the *N* audio channels 402 of the dual-purpose sound system 200. When *N=K,* no processing is necessary, and the *K* source audio signals 520 may be used as the rendered audio signals 521. Renderer 518 may use the speaker configuration (i.e., the speaker positions 844, and possibly the listener position) to render the *K* source audio signals 520. The signal type audio mixer 519 mixes the rendered audio signals 521 to generate the mixed audio signals 522 (step 908). The encoded audio stream 832 may contain multiple audio streams as indicated by "*j*" in FIG. 8. The encoded audio stream 832 may contain channel signals, object signals, and HOA coefficient signals, which may be summed up in the signal type audio mixer 519 to generate the mixed audio signals 522.

After stage-1 audio mixer 512 but before the stage-2 audio mixer 516, volume controller 514 adjusts, controls, or sets the volume of the mixed audio signals 522 to generate variable-volume audio signals 524 (step 910). This enables a user to set the audio volume for the dual-purpose sound system 200 (i.e., the volume level of music, voice announcements, etc.).

In stage-2 of method 900, the stage-2 audio mixer 516 mixes a plurality of the variable-volume audio signals 524 with fixed-volume ultrasonic signals 526 to generate digital output signals 826 (step 912). The volume level of the ultrasonic signals 526 is pre-set and kept fix, such as in the range of about-12dB (where 0dB is the maximum level) or any other level depending on variables such as amplifier output power, loudspeaker efficiency, and expected sound pressure levels at listener positions and receiver positions. The volume level of the ultrasonic signals 526 may be calibrated when the dual-purpose sound system 200 is setup, such as to ensure that no overload of the system occurs. Other methods to prevent signal level overload, such as applying dynamic range limiters, are known to a person skilled in the art. The stage-2 audio mixer 516 provides the *N* output signals in digital format. Thus, D/A converter 808 converts the digital output signals 826 to analog output signals 828 (step 914). Amplifier 810 amplifies the analog output signals 828 to generate amplified output signals 830 (step 916). The set of amplified output signals 830, which are mixed with fixed-volume ultrasonic signals 526, are an example of the combined audio/ultrasonic signals 224. Amplifier 810 then provides, supplies, or feeds the amplified output signals 830 (including the combined audio/ultrasonic signals 224) to a set of the speakers 204 (step 918). The speakers 204 may be in a single enclosure (e.g., Bluetooth speaker, smart speaker, etc.), in separate enclosures (stereo set or surround system), in ceiling/wall installations (e.g., 70/100V distributed sound system), etc. One technical benefit is the dual audio system 202 allows the dual-purpose sound system 200 to simultaneously emit audio signals for listening and ultrasonic beacon signals for localization, while also allowing for volume control of the audio signals independently of the ultrasonic beacon signal. Thus, the volume control of the audio signals does not negatively affect the ultrasonic beacon signal.

The following embodiment illustrates a scenario where *K=N=M=*2*.* In this example, the dual-purpose sound system 200 provides stereo audio for the listener, and has two audio channels 402 (L and R). The dual audio system 202 is configured to superimpose two ultrasonic beacon signals on the two audio channels 402 for localization.

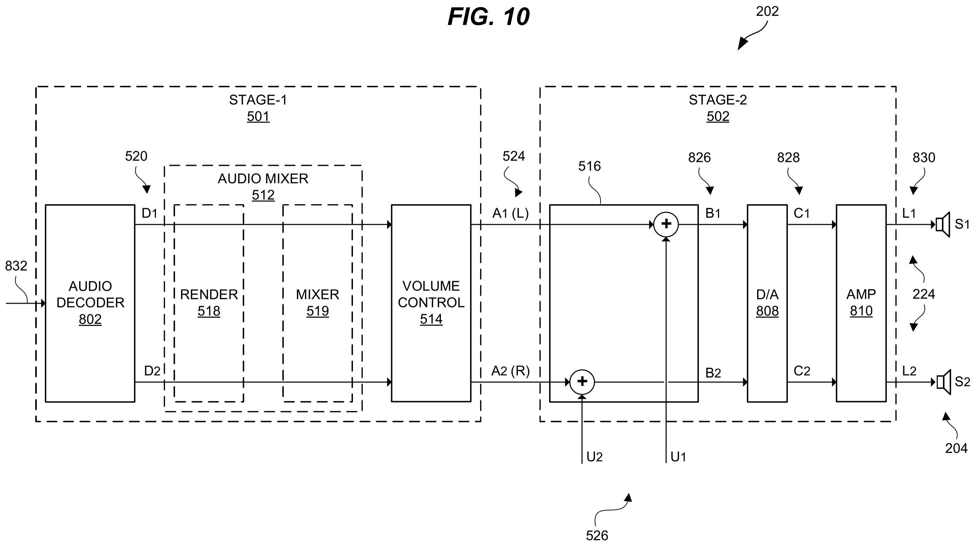

FIG. 10 is a block diagram illustrating a dual audio system 202 in an illustrative embodiment. Dual audio system 202 includes a first stage 501 and a second stage 502 as described above. In the first stage 501, audio decoder 802 is configured to decode an encoded audio stream 832 into two source audio signals 520 (e.g., D₁ and D₂). Because there are two source audio signals 520 contained in the encoded audio stream 832 and two audio channels 402, there is no need for the stage-1 audio mixer 512 to down/up mix the source audio signals 520.

The source audio signals 520 therefore represent the mixed audio signals 522 as discussed above. Volume controller 514 is configured to adjust or set the volume of the source audio signals 520 to generate two variable-volume audio signals 524 (e.g., A₁ and A₂).

In the second stage 502, the stage-2 audio mixer 516 is configured to mix the two variable-volume audio signals 524 with fixed-volume ultrasonic signals 526 (e.g., U₁ and U₂) to generate digital output signals 826 (e.g., B₁ and B₂). D/A converter 808 is configured to convert the digital output signals 826 to analog output signals 828 (e.g., C₁ and C₂). Amplifier 810 is configured to amplify the analog output signals 828 to generate amplified output signals 830 (e.g., L₁ and L₂), which comprise combined audio/ultrasonic signals 224. Dual audio system 202 is configured to provide or supply the combined audio/ultrasonic signals 224 to a pair of speakers 204 (e.g., S₁ and S₂). The speakers 204 receiving a combined audio/ultrasonic signal 224 will simultaneously emit audio sound for a listener (i.e., human 212) and an ultrasonic beacon signal for tracking a tracked object 110. One technical benefit is a stereo system may be used as a dual-purpose sound system 200 that simultaneously provides audio and ultrasonic beacon signals.

The following embodiment illustrates an example for a dual-purpose sound system 200 with four speakers S1, S2, S3, and S4 (i.e., four speaker drivers), such as in a single enclosure. Speaker S1 may be mounted on the front side, speaker S2 on the left side, speaker S3 on the right side, and speaker S4 on the top. Dual-purpose sound system 200 therefore has four audio channels 402 labelled accordingly, F (Front), L (Left), R (Right), and S (Surround). The dual audio system 202 is configured to superimpose four ultrasonic beacon signals on the four audio channels 402 for localization.

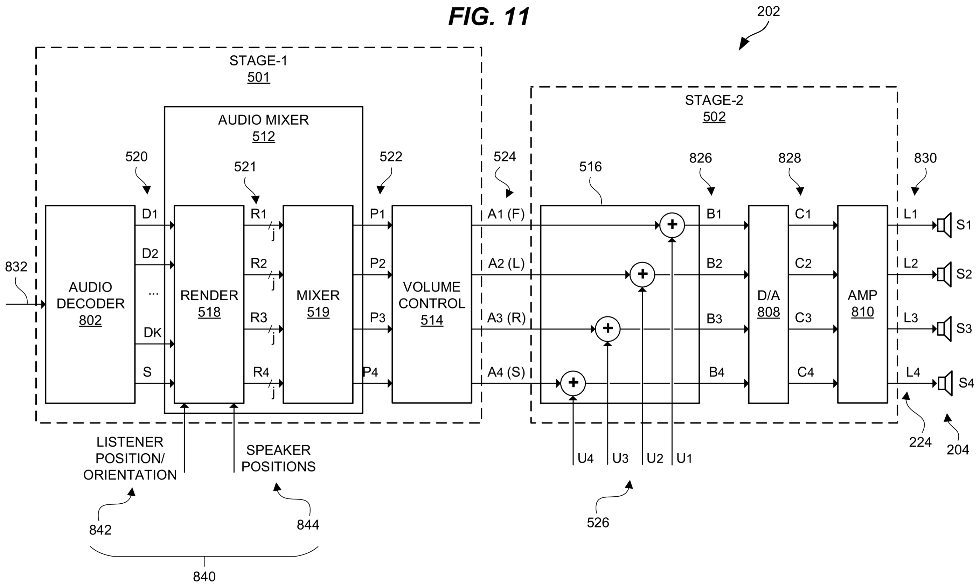

FIG. 11 is a block diagram illustrating a dual audio system 202 in an illustrative embodiment. Dual audio system 202 includes a first stage 501 and a second stage 502 as described above. In the first stage 501, audio decoder 802 is configured to decode an encoded audio stream 832 into *K* source audio signals 520 (e.g., D₁, D₂, ..., D_{K}). Renderer 518 is configured to render the source audio signals 520 to generate four rendered audio signals 521 (e.g., R₁, R₂, R₃, and R₄). The encoded audio stream 832 may be mono, stereo, surround, or another encoded format. Accordingly, renderer 518 is configured to render the source audio signals 520 for the available audio channels 402 (i.e., front, left, right, surround) and for multiple signal sets. The signal type audio mixer 519 is configured to mix the rendered audio signals 521 to generate four system audio signals 522 (e.g., P₁, P₂, P₃, and P₄). Volume controller 514 is configured to adjust or set the volume of the system audio signals 522 to generate four variable-volume audio signals 524 (e.g., A₁, A₂, A₃, and A₄).

In the second stage 502, the stage-2 audio mixer 516 is configured to mix the four variable-volume audio signals 524 with fixed-volume ultrasonic signals 526 (e.g., U₁, U₂, U₃, and U₄) to generate four digital output signals 826 (e.g., B₁, B₂, B₃, and B₄). D/A converter 808 is configured to convert the four digital output signals 826 to four analog output signals 828 (e.g., C₁, C₂, C₃, and C₄). Amplifier 810 is configured to amplify the analog output signals 828 to generate amplified output signals 830 (e.g., L₁, L₂, L₃, and L₄), which comprise combined audio/ultrasonic signals 224. Dual audio system 202 is configured to provide or supply the combined audio/ultrasonic signals 224 to a set of four speakers 204 (e.g., S₁, S₂, S₃, and S₄). The speakers 204 receiving a combined audio/ultrasonic signal 224 will simultaneously emit audio sound for a listener (i.e., human 212) and an ultrasonic beacon signal for tracking a tracked object 110. Depending on the location of the speaker system, the front channel is a direct-path signal, the left and right channels arrive at a listener or an acoustic receiver 102 as reflections from the left and the right wall, respectively, and the surround channel arrives at a listener or an acoustic receiver 102 as the reflection from the ceiling. One technical benefit is a smart speaker, for example, may be used as a dual-purpose sound system 200 that simultaneously provides audio and ultrasonic beacon signals.

The following embodiment illustrates an example of a dual-purpose sound system 200 comprising a 5.1.2 surround sound system with a front-left (FL) speaker S1, a center-channel (C) speaker S2, a front-right (FR) speaker S3, a surround left (SL) speaker S4, a surround right (SR) speaker S5, a height front left (HFL) speaker S6, and a height front right (HFR) speaker S7. Dual-purpose sound system 200 therefore has eight audio channels 402 labelled accordingly (it is noted that the LFE channel is not shown as it cannot be used to carry ultrasonic beacon signals). The dual audio system 202 is configured to superimpose ultrasonic beacon signals on two of the audio channels 402 for localization.

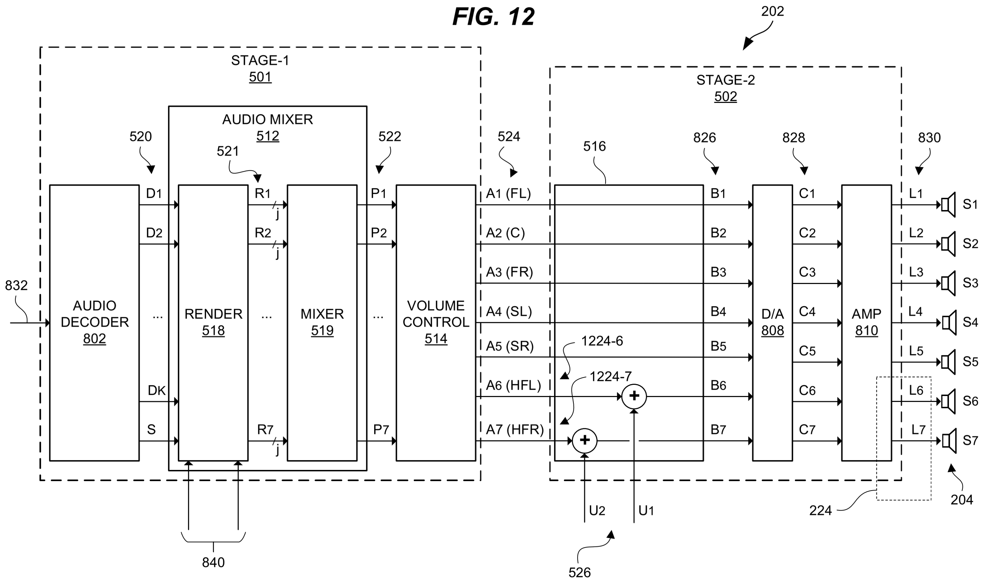

FIG. 12 is a block diagram illustrating a dual audio system 202 in an illustrative embodiment. Dual audio system 202 includes a first stage 501 and a second stage 502 as described above. In the first stage 501, audio decoder 802 is configured to decode an encoded audio stream 832 into *K* source audio signals 520 (e.g., D₁, D₂, ..., D_{K}). Renderer 518 is configured to render the source audio signals 520 to generate seven rendered audio signals 521 (e.g., R₁, R₂, ..., R₇). The signal type audio mixer 519 is configured to mix the rendered audio signals 521 to generate seven system audio signals 522 (e.g., P₁, P₂, ..., and P₇). Volume controller 514 is configured to adjust or set the volume of the system audio signals 522 to generate seven variable-volume audio signals 524 (e.g., A₁, A₂, ..., and A₇).

In the second stage 502, the stage-2 audio mixer 516 is configured to mix a plurality of the variable-volume audio signals 524 with fixed-volume ultrasonic signals 526 to generate the seven digital output signals 826 (e.g., B₁, B₂, ..., B₇). In this embodiment, the stage-2 audio mixer 516 mixes two of the variable-volume audio signals 524 (e.g., A₆, and A₇) with fixed-volume ultrasonic signals 526 (e.g., U₁, and U₂). The fixed-volume ultrasonic signals 526 are mixed with the height channels in this example, which are the HFL channel 1224-6 for the HFL speaker S6 and the HFR channel 1224-7 for the HFR speaker S7. For ultrasonic beacon signals, height channels may be preferable because they are more likely to provide Line-of-Sight (LOS), that is, a direct path from a height speaker to an acoustic receiver 102, which is less prone to being blocked by an object, a person, etc. However, the fixed-volume ultrasonic signals 526 may be superimposed in other ways on the audio channels 402. D/A converter 808 is configured to convert the digital output signals 826 to analog output signals 828 (e.g., C₁, C₂, ..., C₇). Amplifier 810 is configured to amplify the analog output signals 828 to generate amplified output signals 830 (e.g., L₁, L₂, ..., L₇), in which amplified output signals L₆ and L₇ comprise combined audio/ultrasonic signals 224. Dual audio system 202 is configured to provide or supply the amplified output signals L₁ thru L₅ to speakers S₁ through S₅, respectively, and the combined audio/ultrasonic signals 224 (L₆ and L₇) to speakers S₆ and S₇. The speakers 204 receiving a combined audio/ultrasonic signal 224 will simultaneously emit audio sound for a listener (i.e., human 212) and an ultrasonic beacon signal for tracking a tracked object 110. One technical benefit is a 5.1.2 surround sound system may be used as a dual-purpose sound system 200 that simultaneously provides audio and ultrasonic beacon signals.

The following embodiment illustrates an example of a dual-purpose sound system 200 comprising a 5.1.4 surround sound system with a front-left (FL) speaker S1, a center-channel (C) speaker S2, a front-right (FR) speaker S3, a surround left (SL) speaker S4, a surround right (SR) speaker S5, a height front left (HFL) speaker S6, a height front right (HFR) speaker S7, a height surround left (HSL) speaker S8, and a height surround right (HSR) speaker S9. Dual-purpose sound system 200 therefore has ten audio channels 402 labelled accordingly (it is noted that the LFE channel is not shown as it cannot be used to carry ultrasonic beacon signals). The dual audio system 202 is configured to superimpose ultrasonic beacon signals on three of the audio channels 402 for localization.

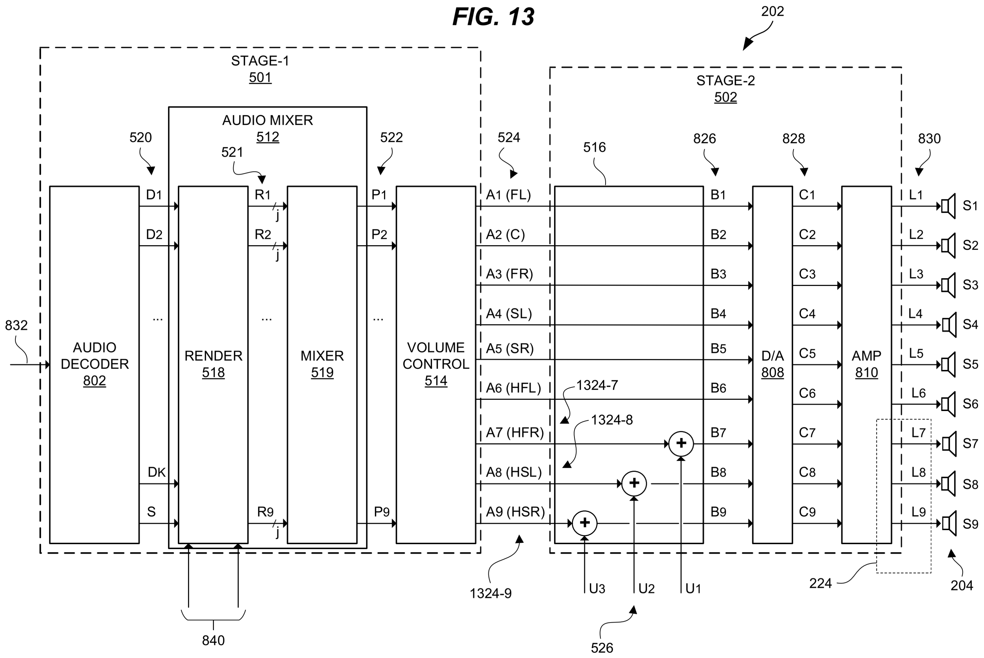

FIG. 13 is a block diagram illustrating a dual audio system 202 in an illustrative embodiment. Dual audio system 202 includes a first stage 501 and a second stage 502 as described above. In the first stage 501, audio decoder 802 is configured to decode an encoded audio stream 832 into K source audio signals 520 (e.g., D₁, D₂, ..., D_{K}). Renderer 518 is configured to render the source audio signals 520 to generate nine rendered audio signals 521 (e.g., R₁, R₂, ..., R₉). The signal type audio mixer 519 is configured to mix the rendered audio signals 521 to generate nine system audio signals 522 (e.g., P₁, P₂, ..., and P₉). Volume controller 514 is configured to adjust or set the volume of the system audio signals 522 to generate nine variable-volume audio signals 524 (e.g., A₁, A₂, ..., and A₉).

In the second stage 502, the stage-2 audio mixer 516 is configured to mix a plurality of the variable-volume audio signals 524 with fixed-volume ultrasonic signals 526 to generate the digital output signals 826 (e.g., B₁, B₂, ..., B₉). In this embodiment, the stage-2 audio mixer 516 mixes three of the variable-volume audio signals 524 (e.g., A₇, A₈, and A₉) with fixed-volume ultrasonic signals 526 (e.g., U₁, U₂, and U₃). The fixed-volume ultrasonic signals 526 are mixed with height channels in this example, which are the HFR channel 1324-7 for the HFR speaker S7, the HSL channel 1324-8 for the HSL speaker S8, and the HSR channel 1324-9 for the HSR speaker S9. However, the fixed-volume ultrasonic signals 526 may be superimposed in other ways on the audio channels 402. D/A converter 808 is configured to convert the digital output signals 826 to analog output signals 828 (e.g., C₁, C₂, ..., C₉). Amplifier 810 is configured to amplify the analog output signals 828 to generate amplified output signals 830 (e.g., L₁, L₂, ..., L₉), in which amplified output signals L₇, L₈, and L₉ comprise combined audio/ultrasonic signals 224. Dual audio system 202 is configured to provide or supply the amplified output signals L₁ thru L₆ to speakers S₁ through S₆, respectively, and the combined audio/ultrasonic signals 224 (L₇, L₈, and L₉) to speakers S₇, S₈, and S₉. The speakers 204 receiving a combined audio/ultrasonic signal 224 will simultaneously emit audio sound for a listener (i.e., human 212) and an ultrasonic beacon signal for tracking a tracked object 110. One technical benefit is a 5.1.4 surround sound system may be used as a dual-purpose sound system 200 that simultaneously provides audio and ultrasonic beacon signals.

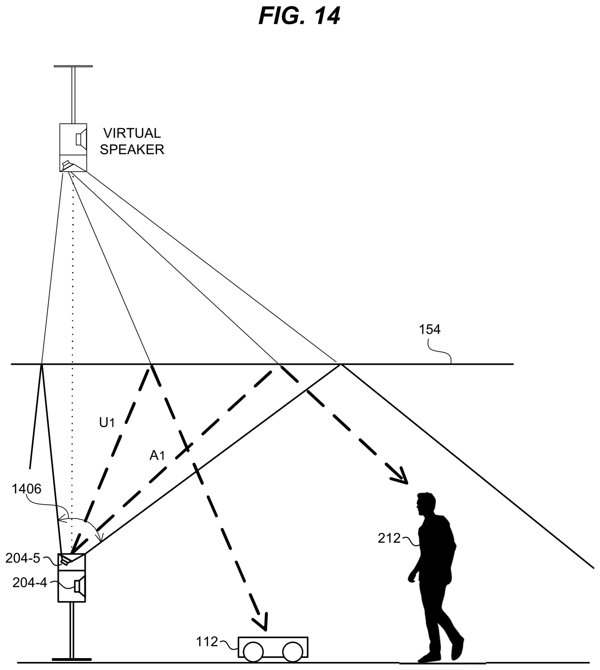

While height speakers may have advantages as mentioned previously, mounting speakers 204 in the ceiling or close to the ceiling is sometimes not practical or possible. An alternative to a ceiling-mounted or height-mounted speaker is shown in FIGS. 14-15. FIG. 14 illustrates an upward-firing speaker 204-5 in an illustrative embodiment. An upward-firing speaker 204-5 is typically designed for surround sound systems, such as Dolby Atmos and DTS:X, and implemented in speaker systems as small as a smart speaker. Like front-firing speakers, upward-firing speakers 204-5 carry audible sound (A₁) and may also carry ultrasonic beacon signals (U₁). The audible sound (A₁) and the ultrasonic beacon signals (U₁) reflect off the ceiling 154. Thus, a robot 112 or the like can "hear" an ultrasonic beacon signal (U₁) reflected from the ceiling 154 while a listener (i.e., human 212) can hear the audible sound (A₁) reflected from the ceiling 154. Since the position of the upward-firing speaker 204-5 is known to the robot 112 by way of setup, the robot 112 knows the position of the "virtual speaker". For a beacon-based localization algorithm (such as ToA or AoA), the position of a virtual speaker is relevant in the calculation of the robot position and orientation. In the system design, the choice of the upward-firing speaker 204-5 may be guided by the desired beamwidth 1406 such that any unwanted direct sound from it to a robot 112 and a listener is sufficiently attenuated.

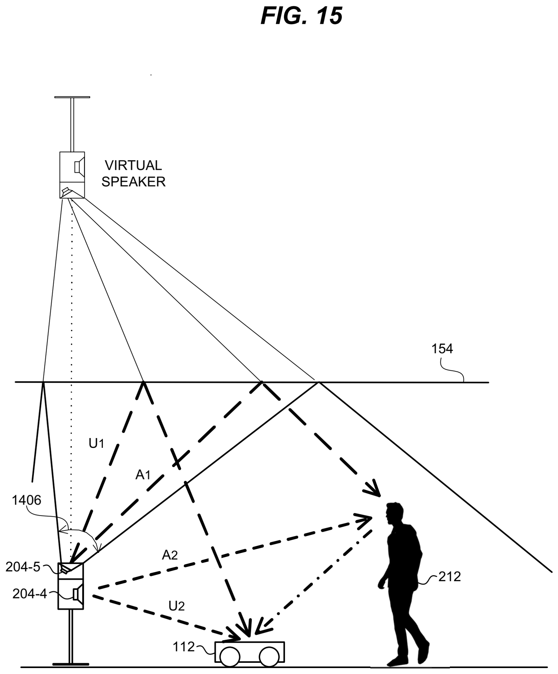

FIG. 15 illustrates an upward-firing speaker 204-5 and a forward-firing speaker 204-4 in an illustrative embodiment. A single speaker system as in FIG. 15 provides four unique sounds, that is, a height audio signal (A₁) from the upward-firing speaker 204-5 and a direct-path audio signal (A₂) from the forward-firing speaker 204-4, and a height ultrasonic signal (U₁) and a direct-path ultrasonic signal (U₂). The robot 112 "hears" two ultrasonic beacon signals, such as a real and a virtual beacon. The robot 112 therefore has a sufficient number of ultrasonic beacon signals to perform localization. In the localization, the beacon coordinates are the position of the "real" speaker (i.e., forward-firing speaker 204-4) and the position of the virtual speaker (i.e., upward-firing speaker 204-5). The position of the virtual speaker may be determined based on the ceiling symmetry, the symmetry line provided by the ceiling 154 (i.e., the symmetry surface in 3-D space), etc.

The speaker system in FIG. 15 contains an upward-firing driver and a forward-firing driver. Examples of these drivers are full-range drivers, mid-range drivers, or coaxial drivers with a low/mid-range driver and a tweeter in a coaxial arrangement. They may also be arranged as two separate drivers comprising a low/midrange driver and a tweeter. In some cases, it may also be desirable to use more than two drivers in the upward-firing section or in the forward-firing section. In FIGS. 14-15, the upward-firing speaker 204-5 is shown with a tilt forward. The driver may be installed in any other way, or without any tilt. A design variable is the beamwidth 1406 of the upward-firing speaker 204-5 when mounted in the enclosure, where it is desirable that the sound of the upward-firing speaker 204-5 is mostly received from the ceiling 154 for both the listener and the robot 112.

While any number of listeners and any number of robots 112 or other tracked objects 110 can receive the signals in FIGS. 14-15 to simplify the illustrations, the examples contain one listener and one robot 112. Also, the examples in FIGS. 14-15 show one speaker system. However, the same concept may be used for any desired number of speaker systems.

The encoded audio stream 832 as discussed above may be encoded as MPEG-H 3D audio streams. MPEG-H supports elevated or height speakers (i.e., speakers above ear level (as in 5.1+4H), but also speakers below ear level (as in 22.2). MPEG-H supports channel encoding, object encoding, and HOA encoding, and it enables interactive three Degree of Freedom (3DoF) rendering based on the listener's orientation (yaw, pitch, and roll).

Sound systems are frequently installed in commercial buildings, such as distribution centers, warehouses, manufacturing facilities, and retail stores. Such sound systems are commonly designed for multiple purposes, but mostly as a background music system, paging system, public announcement system, etc. With the concepts described herein, these sound systems can also be used as an ultrasonic beacon system to localize vehicles, robots, equipment, people, etc.

In these commercial or corporate buildings, commonly 70V/100V distributed speaker systems are used. These systems, also referred to as high-impedance, high-voltage, or constant voltage speaker systems, have ideal properties for large installations. Speakers may be daisy chained through their transformers, avoiding individual cable runs from the amplifier to each speaker. Also, due to the high input impedance of the transformers, the cable impedance is comparably small, allowing long cable runs without the need for large gauge cables. Such distributed sound systems often render only a single monaural audio signal, in which case, the same monaural audio is emitted on each loudspeaker of the distributed system. Even though only a monaural signal is emitted, the distributed sound system may still be organized as a multichannel system, for example, to address the limited number of high-impedance speakers that can be served by a single amplifier channel due to its output power limitations.

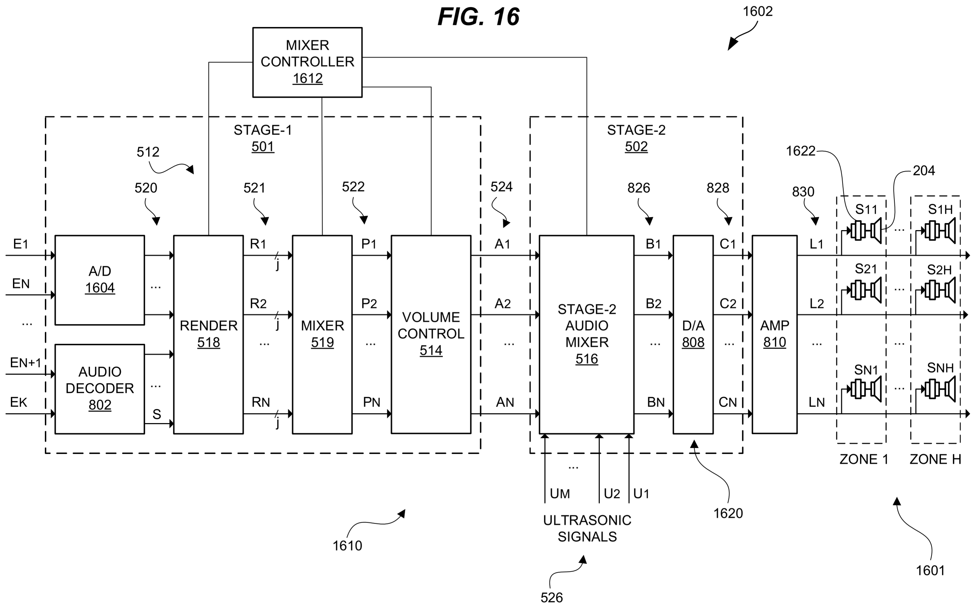

FIG. 16 illustrates a dual audio system 1602 for a distributed sound system 1601 in an illustrative embodiment. Audio input signals E₁, E₂, to E_{K} (e.g., encoded digital audio signals from Wi-Fi, Ethernet, or USB ports, and analog signals from XLR microphone inputs or line level inputs) are first decoded in case of digital signals, or otherwise for analog signals converted to digital signals by an A/D converter 1604. The two-stage mixer 506 may be realized or implemented with a Digital Signal Processor (DSP) 1610. The stage-1 audio mixer 512 may run common signal processing functions such as equalizer, dynamic range processor, effect processor, level adjustment, real-time spectrum analysis, and signal mixing. A user may control the two-stage mixer 506 through a two-stage mixer controller 1612, such as a tablet, a smartphone, or a Mac/Win/Linux computer, etc. The two-stage mixer controller 1612 may connect to the two-stage mixer through Ethernet, USB, Wi-Fi, etc.

The stage-1 audio mixer 512 provides *K* input channels and *N* output channels. The audio signals 522 may be distinctly different for each channel, or they may be all identical (i.e., each of the audio signals contain the same monaural audio mix). The latter is the case when a monaural mix was created in the stage-1 audio mixer 512. The stage-2 audio mixer 516 mixes or adds the ultrasonic signals 526 to the audio signals 524. In this and other embodiments described above, the beacon signals may be provided in digital form, for example, as a data set of *M* unique pre-computed chirps, each using a specified or different frequency band (e.g., with a bandwidth of 1 to 2 kHz). Thus, each speaker 204 may emit a different chirp in a different frequency. Furthermore, the chirps may be short in duration, for example 20 milliseconds (ms), that is, 960 samples for a sampling frequency of 48 kHz, and repeated continuously at a desired rate. In another example, frequency bands of the chirps may overlap, with the chirps differing in duration, differing in frequency increase (up-chirp), differing in frequency decrease (down-chirp), etc. Since the ultrasonic signals 526 may each be specified by a short signal sequence (e.g., a chirp) and a repetition interval, there is no need for physical input channels for these signals. This means, in some cases, a conventional audio system may be converted to a dual-purpose system 202 by adding a stage-2 audio mixer 516 solely by a software modifications, provided that hardware requirements are met. A first hardware requirement is that the D/A conversion provides an upper frequency edge of the passband close (e.g., within 1 kHz) to the Nyquist frequency (e.g., ≥23 kHz for a 24 kHz Nyquist frequency) to enable ultrasonic signals 526 to pass through. A second hardware requirement is that the frequency range of a speaker 204 extends into the ultrasonic range. A third hardware requirement is that software to perform a stage-2 mixer can be installed. In the example for FIG. 16, the first hardware requirement may be met by an oversampling sigma-delta D/A converter 1620 with a sharp roll-off interpolation filter setting. The second hardware requirement may be met by a ribbon, a piezo, a dome tweeter, or any other tweeter that extends into the ultrasonic range with a sufficient beamwidth for the coverage area. The third hardware requirement may be met if the system's software can be modified (e.g., as in a DSP implementation). If these hardware requirements are met or the system can be modified accordingly, then the two-stage mixer may be implemented such that the ultrasonic signals 526 are mixed to the audio signals 524 after master volume control, and such that a constant ultrasonic signal level may be set to ensure good localization performance regardless of the audio volume setting.

In FIG. 16, the *N* output channels of the two-stage mixer (e.g., C₁, C₂, ..., C_{N}) are fed into the amplifier 810, which amplifies the signals and converts the low-impedance outputs to high-impedance outputs using step-up transformers or electronic circuitry. The number of output channels of the amplifier 810 may be, for example, *N*=4. The high-impedance output enables the speakers 204 to be daisy-chained as shown in FIG. 16. At the speaker 204, the impedance needs to be matched to the speaker 204. Therefore, a step-down transformer 1622 is inserted in front of each speaker 204.

Distributed sound systems are often used in shopping malls, retail stores, restaurants, hotels, and public buildings. In conventional distributed sound systems, mono signals are commonly distributed throughout these spaces, in which case, the same monaural audio signal is played out on all speakers. While the distributed audio system part in FIG. 16 may still play out the same monaural audio on all speakers 204 if desired, the distributed beacon part typically provides a unique beacon signal on each speaker channel for an active beacon channel.

For the purpose of localization, the speakers 204 in FIG. 16 are arranged in localization zones (i.e., zone 1 through zone *H*). A localization zone comprises speakers 204 that carry different beacon signals, while they can carry either the same audio signal (mono) or different audio signals, determined by the mixer. A localization zone provides the necessary beacons for localization. When neighboring localization zones are adjoint or overlapping, they may interfere with each other. To avoid such interference, adjoint localization zones may have different frequency channels. For example, in a 4-channel system (*N*=4), localization zone 1 may include one speaker of channel L₁, and one speaker of channel L₂. Localization zone 2 may include one speaker of channel L₃ and one speaker of channel L₄. This way, the beacon signal frequencies of localization zone 1 will not interfere with the frequencies of localization zone 2.

The desired spacing of speakers in a distributed sound system and the desired spacing of beacons in a distributed localization system is often similar, governed foremost by the beamwidth or coverage angle of the speakers and the ceiling height. Nevertheless, a different spacing for the two distributed systems may be accommodated as well. For example, if a smaller spacing is desired for the distributed audio part, the mixer may provide an audio-only output channel, and in turn, speaker channels in FIG. 16 that provide audio only. A localization zone may then have a desired number of audio-only channels.

The transformers 1622 in a high-impedance distribution system may reduce the frequency response at high frequencies. This means the frequency band of the ultrasonic beacon signals may be attenuated. Such high frequency attenuation can occur due to stray magnetic fields or due to core losses in the transformers. However, if the transformers 1622 are well designed, excellent high frequency performance may be achieved.

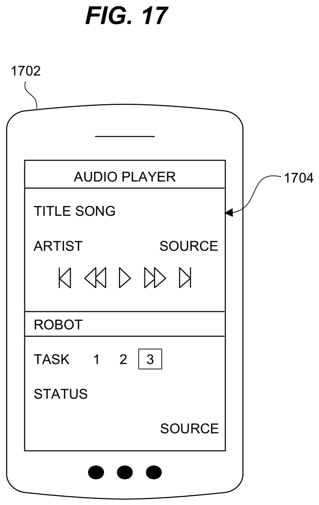

FIG. 17 illustrates a user application 1704 for controlling a dual-purpose sound system in an illustrative embodiment. A user device 1702 (e.g., smartphone, tablet, PC, etc.) of a user may implement a user application 1704. The user application 1704 enables the user to control the audio player and the beacon signal player. The user application 1704 may also add control functions and status indicators for a robot 112 or other tracked object 110. For the audio player part, the user application 1704 enables a user to set the source of the audio signal (e.g., website, server, online radio, personal computer, smartphone, etc.). The user application 1704 allows typical control, if available, over the source play mode (e.g., start/end of music or podcast, fast forward/fast rewind, and play/pause). While the source of the beacon signals may also be set by the user, the source file name and directory may be pre-set during installation and may not require any interventions by the user. Likewise, the beacon signal playback functions may be coupled to the robot on/off status or to the robot tasks. For example, if the robot is powered on, it may trigger that the beacon signals are turned on automatically and, in the same way, turned off if the robot is powered off. The user application 1704 also enables the user to determine the task for the robot and it may show the status of the robot. The user application 1704 may implement a dual audio system as described above to frequency-multiplex the audio signals and the beacon signals.

Instead of one single user application 1704 that performs both as an audio player and as a beacon signal player and possibly as a robot control, two separate applications may be used as well. In this case, the first application (i.e., audio player) may be set to redirect the audio output to the second application (i.e., beacon signal player and robot control). The second application uses the audio signal as input and frequency-multiplexes the audio signal with the beacon signal (typically stereo or multichannel signals). The combined audio/ultrasonic signals may then be transmitted to the sound system.

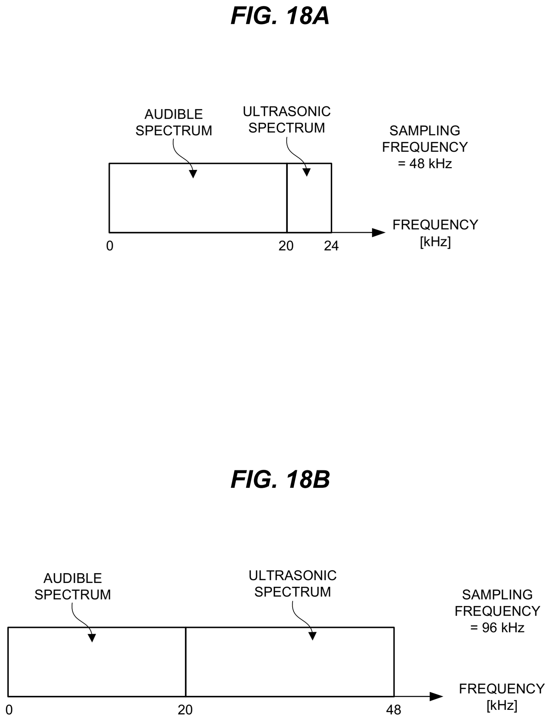

FIGS. 18A-18B illustrate how audio signals and ultrasonic signals are frequency multiplexed in illustrative embodiments. FIG. 18A shows the allocation of the frequency bands for a sampling frequency of 48 kHz. In this case, the lower part of the spectrum from ~0 Hz to 20 kHz, which includes the audible spectrum, is used for the audio signals (e.g., mono, stereo, surround, ...), and the upper part of the spectrum from about 20 kHz to 24 kHz is allocated for the ultrasonic signals. Since contemporary D/A devices use high-order anti-aliasing filters with internal oversampling, a computer-generated digital signal with frequency components approaching the critical Nyquist frequency of 24 kHz can generally be played with little attenuation from the filtering process, leaving a large useable frequency range from about 20 kHz to at least 23 kHz for the ultrasonic signals.

Frequency multiplexing is in many cases a simple mixing procedure of two signal sets comprising the 48 kHz sampled bandlimited audio signal set and the 48 kHz sampled bandlimited ultrasonic signal set. For a stereo system with two speaker channels L₁ and L₂, the two audio signals A₁ and A₂ and the two beacon signals U₁ and U₂ can be mixed in various ways. One simple way is by adding the signals, that is, L₁=A₁+U₁ and L₂=A₂+U₂. This way of mixing assumes the audio signals have little energy in the range 20 kHz to 24 kHz, and the beacon signals have little energy in the frequency range 0 Hz to 20 kHz.

FIG. 18B shows the allocation of the frequency bands for a sampling frequency of 96 kHz. Here, the frequency band for the ultrasonic beacon signals is much wider with a usable frequency bandwidth of about 26 kHz from 20 kHz to 46 kHz. This means that many beacon channels may be allocated in this case. Frequency-multiplexing may be performed in the same way as for the 48 kHz sampling rate case.

Any of the examples described above may use a spectrum allocation for audio signals and beacon signals as described in FIGS. 18A-18B.

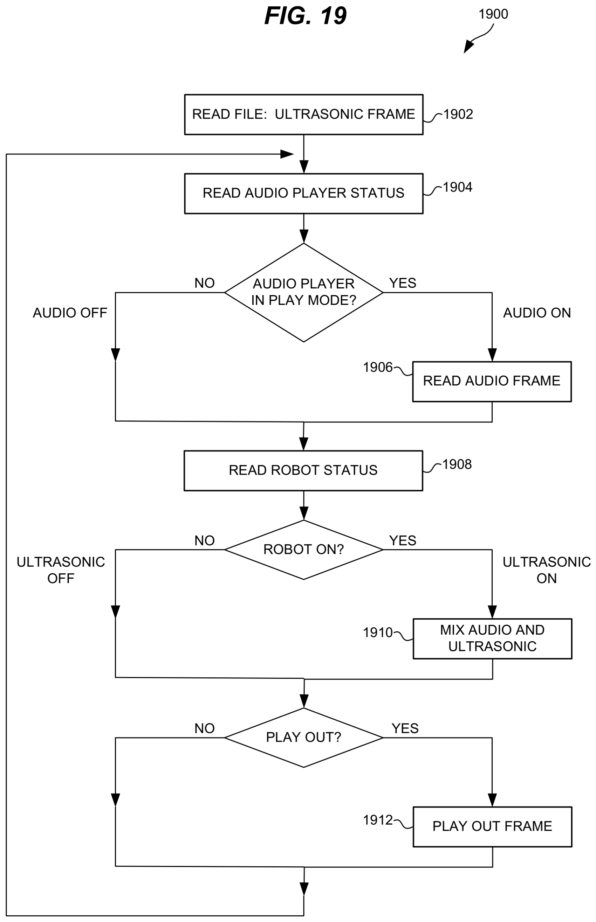

FIG. 19 is a flowchart illustrating a method 1900 of mixing an audio signal and an ultrasonic signal in an illustrative embodiment. The steps of method 1900 will be described with reference to user application 1704 in FIG. 17, but those skilled in the art will appreciate that method 1900 may be performed in other systems or devices. The example in FIG. 19 assumes a frame-wise processing where a frame is a block of samples. Such a frame may comprise samples corresponding to a 20 ms audio interval. For a sampling frequency of 48 kHz, it means that a 20 ms audio interval would include 960 samples. The ultrasonic signals may be contained in one single frame, which may be repetitively played out. The frame may contain *M* channels, where *M* is the number of beacon signals. For a sampling rate of 48 kHz, the ultrasonic frequency band from 20 kHz to 24 kHz may be used. Typically, a computer-generated frame is used with *M* channels containing the ultrasonic signal samples. The ultrasonic signals may comprise frequency sweeps (chirps) or Pseudo-Random Noise Sequences (PRNS).

User application 1704 reads the ultrasonic frame from a file (step 1902). Since the same frame is played out repetitively, the ultrasonic frame is read once at the beginning. User application 1704 reads the audio player status (step 1904). The audio player status may be in stop/pause mode or in play mode. If the audio player is in play mode, user application 1704 reads the next audio frame (step 1906). Otherwise, there is no need to read a frame. User application 1704 reads the robot status (step 1908). If the robot is on or activated, the ultrasonic frame is mixed with the audio frame (step 1910). In other words, the stage-2 audio mixer 516 is activated to mix the variable-volume audio signals 524 with the fixed-volume ultrasonic signals 526. However, if the audio player is not in play mode, the ultrasonic frame is mixed with a null frame or is not mixed at all. User application 1704 then determines whether to play out the frame. When the robot is off and the audio player is off (i.e., not in play mode), then the play out decision is NO. When the robot is on, the play out decision is YES, and the frame is played out by user application 1704 (step 1912). One technical benefit is the beacon signals are turned on when the robot is on. Otherwise, there is no need for the ultrasonic beacon signals. Other criteria to turn on the beacon signals could be used as well. When multiple robots are using the beacon signals, leaving the beacon signals on all the time may be preferable. It is noted again in the above description that a robot could be replaced with an ultrasonic tag or any other tracked object 110. One technical benefit is a user application 1704 is able to control/implement a dual audio system to simultaneously play audio and provide an ultrasonic beacon system.

Any of the various elements or modules shown in the figures or described herein may be implemented as hardware, software, firmware, or some combination of these. For example, an element may be implemented as dedicated hardware. Dedicated hardware elements may be referred to as "processors", "controllers", or some similar terminology. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, a network processor, application specific integrated circuit (ASIC) or other circuitry, field programmable gate array (FPGA), read only memory (ROM) for storing software, random access memory (RAM), non-volatile storage, logic, or some other physical hardware component or module.

Also, an element may be implemented as instructions executable by a processor or a computer to perform the functions of the element. Some examples of instructions are software, program code, and firmware. The instructions are operational when executed by the processor to direct the processor to perform the functions of the element. The instructions may be stored on storage devices that are readable by the processor. Some examples of the storage devices are digital or solid-state memories, magnetic storage media such as a magnetic disks and magnetic tapes, hard drives, or optically readable digital data storage media.

As used in this application, the term "circuitry" may refer to one or more or all of the following:
(a) hardware-only circuit implementations (such as implementations in only analog and/or digital circuitry);
(b) combinations of hardware circuits and software, such as (as applicable):
   (i) a combination of analog and/or digital hardware circuit(s) with software/firmware; and
   (ii) any portions of hardware processor(s) with software (including digital signal processor(s)), software, and memory(ies) that work together to cause an apparatus, such as a mobile phone or server, to perform various functions); and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Although specific embodiments were described herein, the scope of the disclosure is not limited to those specific embodiments. The scope of the disclosure is defined by the following claims and any equivalents thereof.

## Claims

1. An apparatus, comprising:
a first stage comprising a master volume controller configured to perform volume control of audio signals for audio channels of a sound system to generate variable-volume audio signals for the audio channels; and
a second stage comprising an audio mixer configured to mix the variable-volume audio signals for a target set of the audio channels with fixed-volume ultrasonic signals for localization to generate at least two combined audio/ultrasonic signals configured for output to loudspeakers of the sound system corresponding with the target set of the audio channels.

2. The apparatus of claim 1, wherein:
the audio mixer of the second stage comprises a second audio mixer; and
the first stage further comprises a first audio mixer configured to mix the audio signals to generate mixed audio signals provided to the master volume controller.

3. The apparatus of claim 2, wherein:
the first stage further comprises an audio decoder configured to decode an encoded audio stream into source audio signals;
the first audio mixer comprises a renderer and a signal type audio mixer;
the renderer is configured to render the source audio signals to generate rendered audio signals for the audio channels of the sound system; and
the signal type audio mixer is configured to mix the rendered audio signals to generate the mixed audio signals.

4. The apparatus of claim 2, wherein:
the first audio mixer and the second audio mixer are implemented with a digital signal processor.

5. The apparatus of claim 1, wherein:
at least one of the first stage and the second stage includes a digital-to-analog converter comprising an oversampling digital-to-analog converter.

6. The apparatus of claim 1, wherein:
the audio channels of the sound system comprise a front channel, a left channel, a right channel, and a surround channel, and
the audio mixer is configured to mix the variable-volume audio signals for at least two of the audio channels with the fixed-volume ultrasonic signals to generate the combined audio/ultrasonic signals.

7. The apparatus of claim 6, wherein:
the audio mixer is configured to mix the variable-volume audio signals for the front channel and the surround channel with the fixed-volume ultrasonic signals to generate the combined audio/ultrasonic signals.

8. The apparatus of claim 1, wherein:
the audio channels of the sound system comprise a center channel, a left channel, a right channel, surround channels, and height channels, and
the audio mixer is configured to mix the variable-volume audio signals for at least two of the height channels with the fixed-volume ultrasonic signals to generate the combined audio/ultrasonic signals.

9. The apparatus of claim 1, wherein:
the sound system is a distributed sound system;
the audio mixer is configured to mix the variable-volume audio signals for at least two of the audio channels with the fixed-volume ultrasonic signals to generate the combined audio/ultrasonic signals;
each of audio signals for the at least two of the audio channels contain a same monaural audio mix.

10. The apparatus of claim 1, further comprising:
an application configured to determine whether a tracked object is activated, and activate the audio mixer to mix the variable-volume audio signals for the target set of the audio channels with the fixed-volume ultrasonic signals to generate the combined audio/ultrasonic signals when the tracked object is activated.

11. The apparatus of claim 1, wherein:
the fixed-volume ultrasonic signals comprise chirps each using a different frequency band.

12. A method comprising:
performing, at a first stage, volume control of audio signals for audio channels of a sound system to generate variable-volume audio signals for the audio channels;
mixing, at a second stage, the variable-volume audio signals for a target set of the audio channels with fixed-volume ultrasonic signals for localization to generate at least two combined audio/ultrasonic signals configured for output to loudspeakers of the sound system corresponding with the target set of the audio channels;
mixing, at the first stage, the audio signals to generate mixed audio signals, wherein
performing volume control of the audio signals comprises performing volume control of the mixed audio signals.

13. The method of claim 12, further comprising:
decoding, at the first stage, an encoded audio stream into source audio signals; and
rendering, at the first stage, the source audio signals to generate rendered audio signals for the audio channels of the sound system, wherein
mixing at the first stage comprises mixing the rendered audio signals to generate the mixed audio signals.

14. The method of claim 13, wherein:
the fixed-volume ultrasonic signals comprise chirps each using a different frequency band.

15. A computer readable medium embodying programmed instructions which, when executed by a processor, are operable for performing a method of operating a dual audio system, the method comprising:
performing, at a first stage, volume control of audio signals for audio channels of a sound system to generate variable-volume audio signals for the audio channels; and
mixing, at a second stage, the variable-volume audio signals for a target set of the audio channels with fixed-volume ultrasonic signals for localization to generate at least two combined audio/ultrasonic signals configured for output to loudspeakers of the sound system corresponding with the target set of the audio channels.
